(19) Europäisches Patentamt
European Patent Office
Office européen des brevets

(11) **EP 3 409 361 A1**

(12) **EUROPEAN PATENT APPLICATION**
published in accordance with Art. 153(4) EPC

(43) Date of publication:
**05.12.2018 Bulletin 2018/49**

(51) Int Cl.:
*B01J 37/02* (2006.01)  *B01J 23/46* (2006.01)
*B01J 23/755* (2006.01)  *B01J 23/89* (2006.01)
*B01J 32/00* (2006.01)  *B01J 35/02* (2006.01)
*B01J 35/10* (2006.01)

(21) Application number: 17744167.2

(22) Date of filing: **24.01.2017**

(86) International application number:
**PCT/JP2017/002267**

(87) International publication number:
**WO 2017/130937 (03.08.2017 Gazette 2017/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.01.2016 JP 2016011990**

(71) Applicant: **Toda Kogyo Corp.**
**Hiroshima-shi, Hiroshima 732-0828 (JP)**

(72) Inventors:
• **TAKAHASHI, Shinji**
**Otake-shi**
**Hiroshima 739-0652 (JP)**
• **TSUSHIRO, Rei**
**Otake-shi**
**Hiroshima 739-0652 (JP)**
• **HONMYO, Torayuki**
**Otake-shi**
**Hiroshima 739-0652 (JP)**

(74) Representative: **J A Kemp**
**14 South Square**
**Gray's Inn**
**London WC1R 5JJ (GB)**

(54) **HETEROGENEOUS-SYSTEM CATALYST STRUCTURE AND MANUFACTURING METHOD THEREFOR**

(57)    An object of the present invention is to provide a heterogeneous catalyst structural body that can be industrially produced and has a high catalytic activity, in particular, is excellent in mechanical strength and oxidation resistance and comprises magnesium and aluminum. The present invention relates to a heterogeneous catalyst structural body with a size of 1 to 30 mm which has a dense inside structure comprising magnesium and aluminum, said structural body having an atomic ratio of Mg/Al of 0.7 to 10, a BET specific surface area of 10 to 100 $m^2$/g and an average crushing strength of not less than 30 N, in which catalytically active metal particles having a primary particle diameter of 0.5 to 20 nm are fixed in the range of 5 to 200 $\mu$m below from a surface of a carrier.

[FIG. 1]

CATALYST LAYER

1mm

EP 3 409 361 A1

**Description**

TECHNICAL FIELD

The present invention relates to a heterogeneous catalyst structural body that can be suitably used in steam reforming reaction, partial oxidation reaction, autothermal reaction, methanation, CO modification, CO selective oxidation, desulfurization, dehydrogenation, decomposition catalysts, etc., and a process for producing the heterogeneous catalyst structural body.

In addition, the present invention relates to a heterogeneous catalyst structural body that can be industrially produced and has a high catalytic activity, in particular, is excellent in mechanical strength and oxidation resistance and comprises magnesium and aluminum.

BACKGROUND ART

Hitherto, heterogeneous catalysts have been employed in many petrochemical processes as well as processes for production of organic chemical products because these catalysts can be readily separated from a vapor-phase or liquid-phase reaction fluid and can exhibit a function as a catalyst that can be steadily maintained in a reaction apparatus.

The heterogeneous catalysts have been generally used in a particle packed bed through which a liquid and/or gas reactant mixture is passed at a high temperature and a high pressure. Therefore, the heterogeneous catalysts have been frequently provided in the form of a structural body in order to attain good balance between catalytic activity and throughput capacity of the catalysts. The structural body has various shapes such as a spherical shape, a rod shape, a Raschig ring shape, a ring shape, etc., i.e., the heterogeneous catalysts have been formed into various catalyst structures according to applications thereof.

The heterogeneous catalysts are used in various reactions for industrial purposes. For example, the heterogeneous catalysts can be extensively used in the applications such as steam reforming reaction, partial oxidation reaction, autothermal reaction, CO modification, CO selective oxidation and methanation, as well as in the other applications such as desulfurization, dehydrogenation, decomposition catalyst, etc., and are therefore now inevitable industrial materials.

The steam reforming reaction is conducted according to the following reaction formulae:

$$C_nH_m + nH_2O \rightarrow nCO + (n + m/2)H_2$$

$$C_nH_m + 2nH_2O \rightarrow nCO_2 + (2n + m/2)H_2$$

The steam reforming reaction is an endothermic reaction that is generally conducted at a temperature of 600 to 800°C, and therefore can be accelerated as the reaction temperature is increased.

The partial oxidation reaction is conducted according to the following reaction formula:

$$C_nH_m + (n/2)O_2 \rightarrow nCO + (m/2)H_2$$

In general, the partial oxidation reaction is an irreversible exothermic reaction and, therefore, is capable of constructing an energy-saving type process that needs no supply of heat from an external source if the reaction ideally proceeds.

The autothermal reaction is a combination of the aforementioned steam reforming reaction and partial oxidation reaction. By allowing these two reactions to proceed simultaneously, it is possible to produce hydrogen in a self-sustaining manner without needing supply of heat from outside. By using the steam reforming reaction in combination with the partial oxidation reaction, the amount of hydrogen produced can be advantageously increased as compared to the case where the partial oxidation reaction solely is conducted.

The CO modification reaction is generally the reaction occurring in association with the steam reforming reaction. By conducting the CO modification reaction, it is possible to further increase the amount of hydrogen produced and control a composition of the resulting synthesis gas.

$$CO + H_2O \rightarrow H_2 + CO_2$$

The aforementioned CO modification reaction is an exothermic reaction, and may be conducted by mainly using a catalyst such as Pt and Cu therein.

The CO selective oxidation reaction is an exothermic reaction, and may be conducted after the steam reforming reaction and CO modification reaction in domestic fuel cells. In this reaction, CO included in the synthesis gas is selectively oxidized so that the amount of CO included in the domestic fuel cells is reduced up to 10 ppm or less.

$$2CO + O_2 \rightarrow 2CO_2$$

The aforementioned CO selective oxidation reaction is an exothermic reaction, and may be conducted by mainly using a noble metal such as Pt and Ru as an active metal species of a catalyst used therein.

The methanation may be conducted for the purpose of reducing the Co concentration in the synthesis gas similarly to the CO selective oxidation reaction.

$$CO + 2H_2 \rightarrow CH_4 + H_2O$$

The aforementioned methanation reaction is an exothermic reaction. In this reaction, if a large amount of CO or $CO_2$ is introduced into the reaction system, there tends to occur such a risk that thermal runaway is caused, so that the life of the catalyst is considerably reduced. In the methanation reaction, Ru, Ni, etc., are used as a catalytically active metal species of the catalyst similarly to the steam reforming catalyst.

The dehydrogenation reaction is a kind of oxidation reaction, specifically, such a reaction in which intramolecular or intermolecular hydrogen is removed from a compound. In narrow sense, in the dehydrogenation reaction, a double bond is formed in a saturated hydrocarbon. Examples of the industrially important dehydrogenation reaction include selective dehydrogenation of aliphatic hydrocarbon compounds and catalytic reforming of petroleum, naphtha, etc.

$$C_6H_{12} \rightarrow C_6H_6 + 3H_2$$

The active metal species used in the aforementioned dehydrogenation reaction may vary depending upon the hydrocarbons to be treated, and Pt and the like may be mainly used as the active metal species.

In many cases, the heterogeneous catalytic reactions are allowed to proceed on a surface of a catalyst. Therefore, in order to exhibit high catalytic activity, it is important to form an active metal to be supported on the catalyst into fine particles in order to increase a surface area of the active metal.

In addition, as the reaction gas/liquid to be treated in the heterogeneous catalytic reactions, there may be used various gases and liquids (e.g., petroleum-based raw materials such as kerosene, isooctane and gasoline, and hydrocarbon-containing raw materials such as LPG, a city gas and butane, carbon monoxide, and the like). These raw materials may frequently comprise impurities such as oxygen and nitrogen, even though they are present in a slight amount.

For example, in the steam reforming reaction using a hydrocarbon and steam, if deposition of carbon is caused owing to reduction of a concentration of the steam therein, there tends to occur problems such as deactivation of a catalyst used and clogging of a reaction tube. To avoid these problems as much as possible, as the catalytically active metal species acting against the materials to be reacted, a noble metal such as Ru may be used rather than Ni. However, if a slight amount of oxygen is included in the hydrocarbon as the raw material, even when using the noble metal such as Ru in the reaction, the metal particles tend to suffer from oxidation owing to the reaction conducted at an elevated temperature, so that the catalyst tends to be considerably deteriorated in its catalytic activity. That is, the impurity gases such as oxygen tend to be adsorbed onto the surface of the respective catalytically active metal particles to cause oxidation of the catalytically active metal particles, so that remarkable deterioration in catalytic activity of the catalyst used tends to be induced.

From these reasons, it has been required that the heterogeneous catalysts as a typical catalyst for steam reforming reactions not only has high catalytic activity, but also exhibits high resistance to the impurity gases such as oxygen and excellent durability.

As the general heterogeneous catalysts, there have been reported those catalysts obtained by supporting active metals on a molded product formed of alumina or magnesia (Patent Literatures 1 to 4).

CITATION LIST

PATENT LITERATURES

Patent Literature 1: Japanese Patent Application Laid-Open (KOKAI) No. 2001-146406
Patent Literature 2: Japanese Patent Application Laid-Open (KOKAI) No. 2001-276623
Patent Literature 3: Japanese Patent Application Laid-Open (KOKAI) No. 2003-284949
Patent Literature 4: Japanese Patent Application Laid-Open (KOKAI) No. 2012-187485

## SUMMARY OF INVENTION

### TECHNICAL PROBLEM

In the technique of the Patent Literature 1, there is described the steam reforming catalyst used for subjecting hydrocarbons to steam reforming in the presence of a slight amount of oxygen gas. In the Patent Literature 1, a porous α-alumina is used as a preferred carrier for the catalyst, and Ru supported on the carrier is intruded into an inside of the carrier which has no contribution to a catalytic action, so that the catalyst tends to fail to exhibit sufficient catalytic activity. In order to exhibit a sufficient catalytic action of the catalyst, it is necessary to considerably increase an amount of Ru supported on the carrier. In addition, in the Patent Literature 1, although the particle size of Ru supported is not specifically described therein, it is estimated that nano-size particles are hardly supported on the carrier. Thus, it is considered that the catalyst easily loses its catalytic activity owing to the presence of impurity gasses such as oxygen and sulfur.

In the Patent Literature 2, there is described the catalyst formed by supporting Ru on a surface of a porous carrier such as α-alumina. By supporting the active metal species on the surface of the porous carrier, the catalyst may be enhanced in catalytic activity. However, since the particle size of the Ru particles is not well controlled, the catalyst tends to fail to exhibit excellent oxidation resistance.

In the Patent Literature 3, there is described the catalyst formed by supporting Rh and Ru on magnesia as a carrier. However, in the Patent Literature 3, there is no description concerning oxidation resistance of the catalyst. Therefore, it is estimated that the invention of the Patent Literature 3 is insufficient.

In the Patent Literature 4, there is described the catalyst formed by supporting a metal element selected from the group consisting of nickel, iron, cobalt and copper on a carrier comprising alumina or magnesia as a main component. However, since the particle size of the active metal species supported on the carrier is not less than 40 nm, it is readily estimated that the catalyst not only tends to fail to exhibit sufficient catalytic activity, but also tends to be poor in resistance to degradation such as oxidation resistance.

As the carrier for the generally used heterogeneous catalysts, there are known α-alumina structural bodies. The α-alumina structural bodies are sintered by high-temperature calcination in order to enhance mechanical strength thereof. For this reason, the α-alumina structural bodies have a small specific surface area, and it is very difficult to support a sufficient amount of an active metal in the form of fine particles only on a portion of the carrier in the vicinity of the surface thereof.

In addition, there are many reports concerning structural bodies formed of γ-alumina or α-alumina, silica, zeolite, etc. However, there are no reports concerning heterogeneous catalyst structural bodies that comprise a large amount of magnesium and have a large specific surface area and high crushing strength, and are capable of supporting an active metal in the form of fine particles only on a portion of a carrier in the vicinity of the surface thereof and excellent in oxidation resistance.

Furthermore, when producing a carrier in the form of a sintered body by compounding an inorganic binder therein, the inorganic binder tends to cause clogging of pores of the porous powder particles, so that it may be difficult to obtain a catalyst structural body having high activity. For this reason, if a large amount of the inorganic binder is added to enhance mechanical strength of the catalyst, there tends to occur such a problem that the resulting catalyst suffers from not only increase in weight thereof, but also considerable deterioration in performance as a surface porous structure. In the case where a small amount of the inorganic binder is added and sintered, it is necessary to conduct a high-temperature treatment in view of high strength of the resulting catalyst, so that it is inevitably required to increase the cost for heat energy. The resulting catalyst structural body tends to suffer from change in crystal structure of the porous powder particles, and as a result, tends to suffer from deterioration in surface pores of the structural body and specific surface area thereof.

An object of the present invention is to provide a heterogeneous catalyst structural body that can be suitably used in steam reforming reaction, partial oxidation reaction, autothermal reaction, methanation, CO modification, CO selective oxidation, desulfurization, dehydrogenation, decomposition catalysts, etc., and a process for producing the heterogeneous catalyst structural body.

In addition, a further object of the present invention is to provide a heterogeneous catalyst structural body that can be industrially produced and has a high catalytic activity, in particular, is excellent in mechanical strength and oxidation resistance and comprises magnesium and aluminum.

### SOLUTION TO PROBLEM

The aforementioned technical tasks or objects of the present invention can be achieved by the following aspects of the present invention.

That is, according to the present invention, there is provided a heterogeneous catalyst structural body with a size of 1 to 30 mm, comprising:

a carrier having a dense inside structure comprising magnesium and aluminum, and
catalytically active metal particles having a primary particle diameter of 0.5 to 20 nm;
said structural body having an atomic ratio of Mg/Al of 0.7 to 10, a BET specific surface area of 10 to 100 $m^2$/g and an average crushing strength of not less than 30 N, in which the catalytically active metal particles are present in the range of 5 to 200 $\mu$m below from a surface of the carrier (Invention 1).

Also, according to the present invention, there is provided the heterogeneous catalyst structural body wherein the catalytically active metal particles comprise at least one element selected from the group consisting of Mn, Fe, Co, Ni, Cu, Zn, Ru, Rh, Pd, Ag, Re, Os, Ir, Pt and Au, and are supported in an amount of 0.05 to 10% by weight on the carrier (Invention 2).

In addition, according to the present invention, there is provided a process for producing the heterogeneous catalyst structural body, comprising a step of supporting a raw material capable of forming the catalytically active metal particles on the carrier, in which the raw material is used in the form of a raw material solution comprising free nitric acid of 1 to 30% by weight (Invention 3).

ADVANTAGEOUS EFFECTS OF INVENTION

The heterogeneous catalyst structural body having a size of 1 to 30 mm according to the present invention has a dense inside structure and comprises at least magnesium and aluminum, and exhibits a large BET specific surface area and high mechanical strength. In the heterogeneous catalyst structural body, the catalytically active metal particles having a primary particle diameter of 0.5 to 20 nm are present in the range of not less than 5 and not more than 200 $\mu$m below from a surface of the carrier. For these reasons, the heterogeneous catalyst structural body of the present invention is capable of exhibiting high catalytic activity and excellent oxidation resistance when used in steam reforming reaction, partial oxidation reaction, autothermal reaction, CO modification reaction, CO selective oxidation reaction and methanation reaction as well as desulfurization, dehydrogenation, decomposition reaction, etc.

Furthermore, the heterogeneous catalyst structural body of the present invention comprises a large amount of magnesium, and therefore can be suitably used as a catalyst for reforming hydrocarbons comprising a large amount of a sulfur component such as a city gas, LPG and biomasses.

BRIEF DESCRIPTION OF DRAWINGS

FIG. 1 is a microphotograph obtained by a stereoscopic microscope showing a cross section of the heterogeneous catalyst structural body obtained in Example 1.
FIG. 2 is a microphotograph obtained by a stereoscopic microscope showing a cross section of the heterogeneous catalyst structural body obtained in Comparative Example 2.

DESCRIPTION OF EMBODIMENTS

The heterogeneous catalyst structural body according to the present invention is described below.

The heterogeneous catalyst structural body according to the present invention has a size of 30 mm as a maximum value and 1 mm as a minimum value. The shape of the heterogeneous catalyst structural body according to the present invention is not particularly limited and may be of any shape suitably used for ordinary catalysts. Examples of the shape of the heterogeneous catalyst structural body include a spherical shape, a cylindrical shape, a hollow cylindrical shape and the like. The size of of the heterogeneous catalyst structural body having a spherical shape according to the present invention is usually 1 to 30 mm$\phi$, preferably 1.5 to 20 mm$\phi$ and more preferably 2 to 10 mm$\phi$.

The heterogeneous catalyst structural body according to the present invention has a dense inside structure in order to maintain good mechanical strength. Meanwhile, the term "dense" as used herein means that the heterogeneous catalyst structural body has such denseness that gases (for example, hydrogen gas) are inhibited from passing through an inside of the heterogeneous catalyst structural body.

The heterogeneous catalyst structural body according to the present invention comprises active metal particles and an oxide carrier. The elements constituting the oxide carrier are magnesium and aluminum. The elements other than the aluminum and magnesium elements as the constituting elements of the oxide carrier are not particularly limited, and the oxide carrier may further comprise sodium, calcium, potassium, silicon and the like.

The compositional ratio between magnesium and aluminum in the heterogeneous catalyst structural body according to the present invention is 0.7 to 10 in terms of an atomic ratio of Mg/Al therein. When the atomic ratio of Mg/Al in the heterogeneous catalyst structural body is less than 0.7, the resulting structural body tends to have a small BET specific surface area, so that it is not possible to support the catalytically active metal in the form of nano-size particles thereon. On the other hand, when the atomic ratio of Mg/Al in the heterogeneous catalyst structural body is more than 10, the resulting structural body tends to be deteriorated in mechanical strength. The atomic ratio of Mg/Al in the heterogeneous catalyst structural body is preferably 0.8 to 5 and more preferably 1.0 to 2.5.

The BET specific surface area of the heterogeneous catalyst structural body according to the present invention is 10 to 100 m$^2$/g. When the BET specific surface area of the heterogeneous catalyst structural body is less than 10 m$^2$/g, it is meant that the carrier has a large average pore diameter, and it is not possible to disperse and support a sufficient amount of the active metal on the structural body. The heterogeneous catalyst structural body having a BET specific surface area of more than 100 m$^2$/g tends to be hardly produced industrially, and therefore tends to be unpractical. The BET specific surface area of the heterogeneous catalyst structural body according to the present invention is preferably 15 to 90 m$^2$/g and more preferably 20 to 80 m$^2$/g.

The average crushing strength of the heterogeneous catalyst structural body according to the present invention (as measured by the method described in the below-mentioned Examples) is not less than 30 N. When the average crushing strength of the heterogeneous catalyst structural body is less than 30 N, the resulting structural body tends to suffer from breakage when used under high-temperature environmental conditions. The average crushing strength of the heterogeneous catalyst structural body according to the present invention is preferably not less than 40 N and more preferably not less than 50 N.

In the heterogeneous catalyst structural body according to the present invention, the catalytically active metal is supported on the surface of the heterogeneous catalyst structural body. The catalytically active metal is supported in the range of at least 5 $\mu$m below from the surface of the heterogeneous catalyst structural body and 200 $\mu$m at a maximum below from the surface thereof (i.e., in the range of 5 to 200 $\mu$m below from the surface of the structural body). When the catalytically active metal is present in the range of not more than 5 $\mu$m below from the surface of the heterogeneous catalyst structural body, it is not possible to support the catalytically active metal in the form of nano-size particles thereon. When the catalytically active metal is present in the range of more than 200 $\mu$m below from the surface of the heterogeneous catalyst structural body, the resulting catalyst structural body tends to fail to exhibit sufficient catalyst performance. The range of the heterogeneous catalyst structural body in which the catalytically active metal is present is preferably 5 to 150 $\mu$m and more preferably 5 to 100 $\mu$m below from the surface of the structural body.

The primary particle diameter of the catalytically active metal supported on the heterogeneous catalyst structural body according to the present invention is in the range of 0.5 to 20 nm. When the primary particle diameter of the catalytically active metal supported is less than 0.5 nm, it may be difficult to industrially produce such a structural body. On the other hand, when the primary particle diameter of the catalytically active metal supported is more than 20 nm, the resulting catalyst structural body tends to fail to exhibit sufficient catalyst performance, and tends to be deteriorated in oxidation resistance. The primary particle diameter of the catalytically active metal supported on the heterogeneous catalyst structural body according to the present invention is preferably 0.6 to 18 nm and more preferably 0.7 to 17 nm.

The catalytically active metal particles of the heterogeneous catalyst structural body according to the present invention are preferably in the form of particles comprising at least one element selected from the group consisting of Mn, Fe, Co, Ni, Cu, Zn, Ru, Rh, Pd, Ag, Re, Os, Ir, Pt and Au. The catalytically active metal particles may be constituted of not only a single element but also alloy particles, or may be in the form of a mixture of these particles. Therefore, the configurations of the catalytically active metal particles except for the primary particle diameter thereof are not particularly limited. The catalytically active metal particles are used in many heterogeneous reactions, and can exhibit various catalytic activities in the respective reactions.

The amount of the catalytically active metal supported by the heterogeneous catalyst structural body according to the present invention is 0.05 to 10% by weight. When the amount of the catalytically active metal supported is less than 0.05% by weight, the resulting structural body tends to be extremely deteriorated in oxidation resistance, and further it is not possible to maintain adequate durability of the catalyst. When the amount of the catalytically active metal supported is more than 10% by weight, it may be difficult to support the catalytically active metal particles having a primary particle diameter of not more than 20 nm on the catalyst.

The volume ratio of the catalyst layer of the heterogeneous catalyst structural body according to the present invention is preferably 2 to 40%. The volume ratio of the catalyst layer as defined herein is the value based on the volume of the heterogeneous catalyst structural body. When the volume ratio of the catalyst layer is more than 40%, it is not possible to maintain good mechanical strength of the heterogeneous catalyst structural body. The volume ratio of the catalyst layer of the heterogeneous catalyst structural body according to the present invention is more preferably 5 to 35% and even more preferably 5 to 30%.

The process for producing the heterogeneous catalyst structural body according to the present invention is described below.

The process for producing the heterogeneous catalyst structural body according to the present invention comprises the steps of preparing a molded product of hydrotalcite compound particles comprising magnesium and aluminum as a precursor; calcining the obtained molded product of the hydrotalcite compound particles in atmospheric air; supporting a catalytically active metal on the thus calcined molded product of the hydrotalcite compound particles; and calcining the resulting structural body under a reducing atmosphere, in which upon supporting the catalytically active metal on the molded product, a raw material solution comprising free nitric acid of 1 to 30% by weight is used.

The hydrotalcite compound particles comprising magnesium and aluminum used in the present invention may be obtained by mixing an anion-containing alkaline aqueous solution with a magnesium raw material and an aluminum raw material in a water solvent to prepare a mixed solution having a pH value of 7.0 to 13.0, aging the resulting mixed solution in a temperature range of 50 to 300°C, and then subjecting the resulting mixture to separation by filtration, followed by drying the obtained solids.

The aging time is not particularly limited and is 1 to 80 hr, preferably 3 to 24 hr and more preferably 5 to 18 hr. When the aging time is more than 80 hr, such a growth reaction tends to be industrially disadvantageous.

The magnesium raw material and the aluminum raw material are not particularly limited as long as they are in the form of a water-soluble raw material such as a nitric acid salt.

Examples of the magnesium raw material used in the present invention include magnesium oxide, magnesium hydroxide, magnesium oxalate, magnesium sulfate, magnesium sulfite, magnesium nitrate, magnesium chloride, magnesium citrate, basic magnesium carbonate and magnesium benzoate.

Examples of the aluminum raw material used in the present invention include aluminum oxide, aluminum hydroxide, aluminum acetate, aluminum chloride, aluminum nitrate, aluminum oxalate and basic aluminum ammonium salts.

The hydrotalcite compound particles comprising magnesium and aluminum as the precursor of the heterogeneous catalyst structural body as used in the present invention preferably have an average plate surface diameter of 0.05 to 0.4 $\mu$m. When the average plate surface diameter of the hydrotalcite compound particles is less than 0.05 $\mu$m, it may be difficult to subject the resulting particles to separation by filtration and washing with water, so that it may be difficult to industrially produce the hydrotalcite compound particles. On the other hand, when the average plate surface diameter of the hydrotalcite compound particles is more than 0.4 $\mu$m, it may be difficult to produce the aimed heterogeneous catalyst structural body.

The hydrotalcite compound particles used in the present invention preferably have a crystallite size $D_{006}$ of 0.001 to 0.08 $\mu$m. When the crystallite size $D_{006}$ of the hydrotalcite compound particles is less than 0.001 $\mu$m, the viscosity of the resulting aqueous suspension tends to be very high, so that it may be difficult to industrially produce the hydrotalcite compound particles. When the crystallite size $D_{006}$ of the hydrotalcite compound particles is more than 0.08 $\mu$m, it may be difficult to produce the aimed heterogeneous catalyst structural body. The crystallite size $D_{006}$ of the hydrotalcite compound particles used in the present invention is more preferably 0.002 to 0.07 $\mu$m.

The hydrotalcite compound particles comprising magnesium and aluminum as used in the present invention preferably have a BET specific surface area of 3.0 to 300 m$^2$/g. When the BET specific surface area of the hydrotalcite compound particles is less than 3.0 m$^2$/g, it may be difficult to produce the aimed porous structural body. When the BET specific surface area of the hydrotalcite compound particles is more than 300 m$^2$/g, the viscosity of the resulting aqueous suspension tends to be very high, and it may also be difficult to subject the suspension to separation by filtration and washing with water. As a result, it may be difficult to industrially produce the hydrotalcite compound particles. The BET specific surface area of the hydrotalcite compound particles used in the present invention is more preferably 5.0 to 250 m$^2$/g.

The ratio between magnesium and aluminum in the hydrotalcite comprising magnesium and aluminum as used in the present invention is not particularly limited. The molar ratio of magnesium to aluminum (Mg:Al) in the hydrotalcite is preferably from 4:1 to 1:1.

The diameter of secondary aggregated particles of the hydrotalcite compound particles used in the present invention is 0.1 to 200 $\mu$m. When the diameter of secondary aggregated particles of the hydrotalcite compound particles is less than 0.1 $\mu$m, the resulting particles tend to be hardly subjected to pulverization treatment. As a result, it may be difficult to industrially produce the aimed particles. When the diameter of secondary aggregated particles of the hydrotalcite compound particles is more than 200 $\mu$m, it may be difficult to produce the molded product of the hydrotalcite compound particles. The diameter of secondary agglomerated particles of the hydrotalcite compound particles is preferably 0.2 to 100 $\mu$m. The pulverization treatment may be carried out using a general pulverizing device (such as an atomizer, YARIYA and a Henschel mixer, etc.).

In the molding step for production of the heterogeneous catalyst structural body according to the present invention, the hydrotalcite compound particles comprising at least magnesium and aluminum are mixed with a molding assistant and a binder and further with water and an alcohol both serving as a dispersing medium, and the resulting mixture is kneaded into a clayey mass using a kneader (such as a screw kneader), followed by molding the resulting clayey mass into a desired shape. As the molding method, there may be used a compression molding method, a press molding method, a tablet molding method, etc.

The clayey mass kneaded material obtained by the above molding method may be dried by various methods such as natural drying, hot air drying and vacuum drying.

The thus dried clayey mass kneaded material is further subjected to heat treatment in atmospheric air to thereby obtain the carrier for the heterogeneous catalyst structural body according to the present invention. The heat treatment may be carried out at a temperature of 900 to 1500°C. When the heat treatment temperature is lower than 900°C, the heat treatment tends to require a prolonged time to ensure a good crushing strength of the resulting heterogeneous catalyst structural body, which results in industrial disadvantageous process. On the other hand, when the heat treatment temperature is higher than 1500°C, the resulting porous structural body tends to suffer from breakage of pores therein. The heat treatment temperature is preferably 900 to 1400°C and more preferably 1000 to 1300°C.

The heat treatment time is 1 to 72 hr. When the heat treatment time is less than 1 hr, the resulting porous structural body tends to be deteriorated in crushing strength. When the heat treatment time is more than 72 hr, the pores of the resulting porous structural body tend to be broken, and such a prolonged heat treatment tends to be disadvantageous from industrial viewpoints. The heat treatment time is preferably 2 to 60 hr and more preferably 3 to 50 hr.

Examples of the molding assistant include celluloses, polyvinyl alcohol, starches, methyl cellulose, maltose and carboxymethyl cellulose. These molding assistants may be be used in combination of any two or more thereof. These molding assistants are dissipated by combustion from the molded product when subjecting the molded product to the calcination treatment, and therefore no longer remain in the resulting porous molded product. The amount of the molding assistant added may be, for example, 1 to 50 parts by weight based on 100 parts by weight of the hydrotalcite compound particles comprising magnesium and aluminum.

As the binder, there may be used these materials having re-hydration properties, such as alumina, α-alumina, aluminum salts, silica, clay, talc, bentonite, zeolite, cordierite, titania alkali metal salts, alkali earth metal salts, rare earth metal salts, zirconia, mullite, sepiolite, montmorillonite, halloysite, saponite, stevensite, hectorite, silica alumina, etc. These binders may be used in combination of any two or more thereof. In the case where the salts other than the oxides are added, it is important that the salts are decomposed by the calcination treatment and transformed into an oxide. The amount of the binder added is, for example, 1 to 50 parts by weight based on 100 parts by weight of the hydrotalcite compound particles comprising magnesium and aluminum.

Examples of the alcohols include monohydric alcohols such as ethanol and propanol; glycols such as ethylene glycol, propylene glycol, butanediol and polyethylene glycol; and polyhydric alcohols such as glycerin. These alcohols may be used in combination of any two or more thereof. The amount of the alcohols added may be, for example, 50 to 150 parts by weight based on 100 parts by weight of the hydrotalcite compound particles comprising magnesium and aluminum.

In addition, a combustible substance may also be added to the hydrotalcite compound particles. Examples of the combustible substance include wood chips, cork grains, coal powder, activated carbon, crystalline cellulose powder, starches, sucrose, gluconic acid, polyethylene glycol, polyvinyl alcohol, polyacrylamide, polyethylene, polystyrene and a mixture thereof. As the amount of the above combustible substance added is increased, the pore volume of the resulting molded product becomes larger. However, the addition of an excessive amount of the combustible substance tends to result in deteriorated strength of the resulting molded product. Therefore, the amount of the combustible substance added may be suitably controlled in view of a good strength of the resulting molded product.

Alternatively, the heterogeneous catalyst structural body may be formed into a honeycomb structure. In such a case, the honeycomb-shaped molded product may be obtained by an optional method selected according to the requirements.

When at least one catalytically active metal selected from the group consisting of Mn, Fe, Co, Ni, Cu, Zn, Ru, Rh, Pd, Ag, Re, Os, Ir, Pt and Au which has an average particle diameter of 0.5 to 20 nm is supported in the range of not less than 5 μm and not more than 200 μm below from a surface of the heterogeneous catalyst structural body as defined in the aforementioned Invention 1, the resulting catalyst structural body is capable of exhibiting a catalytic activity as a heterogeneous catalyst.

The method of supporting the catalytically active metal on the heterogeneous catalyst structural body according to the present invention is not particularly limited. For example, the catalytically active metal may be supported on the heterogeneous catalyst structural body comprising magnesium and aluminum by ordinary methods such as a precipitation method, a heat-impregnation method, a normal-temperature impregnation method, an equilibrium adsorption method, an evaporation-to-dryness method, a competitive adsorption method, an ion-exchange method and a spray method. Among these methods for supporting the catalytically active metal on the heterogeneous catalyst structural body, preferred is the spray method.

The Mn, Fe, Co, Ni, Cu, Zn, Ru, Rh, Pd, Ag, Re, Os, Ir, Pt and Au raw materials are not particularly limited as long as they are in the form of a water-soluble raw material such as a nitric acid salt.

The concentration of free nitric acid in a free nitric acid solution of the catalytically active metal prepared upon supporting at least one catalytically active metal selected from the group consisting of Mn, Fe, Co, Ni, Cu, Zn, Ru, Rh, Pd, Ag, Re, Os, Ir, Pt and Au on the heterogeneous catalyst structural body according to the present invention, is 1 to 30% by weight. When the concentration of free nitric acid in the free nitric acid solution of the catalytically active metal prepared is less than 1% by weight, the average particle diameter of the catalytically active metal tends to be increased.

On the other hand, when the concentration of free nitric acid in the free nitric acid solution of the catalytically active metal prepared is more than 30% by weight, such a process tends to be improper from the industrial viewpoints. The concentration of free nitric acid in the free nitric acid solution of the catalytically active metal prepared upon supporting the catalytically active metal on the heterogeneous catalyst structural body is preferably 2 to 25% by weight and more preferably 3 to 20% by weight. Meanwhile, the free nitric acid means not a ligand coordinated to the catalytically active metal, but nitric acid being present in an excessive amount.

The heterogeneous catalyst structural body according to the present invention may be produced by supporting at least one catalytically active metal selected from the group consisting of Mn, Fe, Co, Ni, Cu, Zn, Ru, Rh, Pd, Ag, Re, Os, Ir, Pt and Au thereon and then subjecting the resulting material to reducing treatment in a temperature range of 200 to 1000°C. When the reducing temperature is lower than 200°C, the catalytically active metal tends to be hardly metallized, so that it is not possible to attain good catalytic activity of the resulting catalyst as aimed by the present invention. When the reducing temperature is higher than 1000°C, sintering of the catalytically active metal tends to proceed, so that the resulting structural body tends to fail to exhibit sufficient catalytic activity and oxidation resistance. The reducing temperature is preferably 300 to 900°C and more preferably 400 to 800°C.

The atmosphere used in the reducing treatment is not particularly limited as long as it is a reducing atmosphere such as a hydrogen-containing gas.

The time of the reducing treatment is not particularly limited and is preferably 0.5 to 20 hr. When the time of the reducing treatment is more than 20 hr, the process tends to have no merit from industrial viewpoints. The time of the reducing treatment is preferably 1 to 10 hr.

<u><Function></u>

The reason why the heterogeneous catalyst structural body according to the present invention can exhibit high catalytic activity and mechanical strength as well as high oxidation resistance is considered by the present inventor as follows.

That is, the heterogeneous catalyst structural body according to the present invention is produced by subjecting hydrotalcite in the form of a layered double hydroxide as a precursor to calcination treatment. The calcination treatment causes dehydration of the hydrotalcite to remove water therefrom and thereby transform the hydrotalcite into an oxide comprising magnesium and aluminum and having a large amount of fine pores, so that the resulting heterogeneous catalyst structural body has a dense inside structure, but exhibits a very large specific surface area. Furthermore, when preparing the solution comprising the catalytically active metal upon supporting the catalytically active metal on the structural body, nitric acid is added thereto to control a concentration of free nitric acid in the solution, thereby producing the heterogeneous catalyst structural body. As a result, it is possible not only to stabilize the catalytically active metal ions in the solution, but also to dissolve magnesium and aluminum present in the vicinity of the surface of the carrier to form fine pores therein, so that the catalytically active metal in the form of fine particles can be supported on the carrier. As a result, the resulting heterogeneous catalyst structural body can exhibit high catalytic activity, mechanical strength and oxidation resistance.

The catalytically active metal particles supported on the heterogeneous catalyst structural body according to the present invention are nano-size particles, and supported on the carrier in the range of not less than 5 $\mu$m and not more than 200 $\mu$m below from the surface of the carrier. The portion of the heterogeneous catalyst structural body which contributes to the heterogeneous catalytic reaction is the portion in the vicinity of the surface of the heterogeneous catalyst structural body, whereas the inside portion of the heterogeneous catalyst structural body has substantially no contribution to the heterogeneous catalytic reaction owing to denseness thereof. The heterogeneous catalyst structural body according to the present invention supports the nano-size catalytically active metal particles in the vicinity of the surface of the carrier. That is why the structural body is remarkably excellent in catalytic activity and can exhibit high oxidation resistance as compared to the conventional catalyst structural body, though the amounts of the catalytically active metal supported are identical in both the structural bodies. Here, the catalytically active metal of the conventional catalyst structural body is present even until an inside portion of the structural body.

As described above, the heterogeneous catalyst structural body according to the present invention can maintain a large specific surface area even when calcined at a high temperature, and therefore the heterogeneous catalyst structural body can be enhanced in mechanical strength by sintering the structural body.

The heterogeneous catalyst structural body comprising at least magnesium and aluminum according to the present invention is capable of exhibiting high catalytic activity and high oxidation resistance, and therefore can be suitably used in steam reforming reaction, partial oxidation reaction, autothermal reaction, methanation, CO modification, CO selective oxidation, desulfurization, dehydrogenation, decomposition catalysts, etc.

EXAMPLES

Typical examples of the present invention are described below.

The BET specific surface area was measured by nitrogen BET method.

The mechanical strength (crushing strength) of the heterogeneous catalyst structural body was measured according to JIS Z 8841, specifically, was determined from an average value of strengths of the 100 structural bodies as measured using a digital force gauge.

The content of each of magnesium, aluminum and the respective catalytically active metals (including Mn, Fe, Co, Ni, Cu, Zn, Ru, Rh, Pd, Ag, Re, Os, Ir, Pt and Au) was determined as follows. That is, a sample was dissolved in an acid, and the resulting solution was analyzed by a plasma emission spectroscopic device "SPS-4000" manufactured by Seiko Denshi Kogyo Co., Ltd.

The particle size of the respective catalytically active metals (including Mn, Fe, Co, Ni, Cu, Zn, Ru, Rh, Pd, Ag, Re, Os, Ir, Pt and Au) was expressed by an average value of the particle sizes measured by an electron microscope. The particle size of the metal fine particles which was more than 10 nm was calculated according to the Scherrer's formula from their particle sizes measured using an X-ray diffractometer "D8 ADVANCE" manufactured by Bruker Corporation (x-ray tube: Cu; tube voltage: 40 kV; tube current: 300 mA; goniometer: wide-angle goniometer; sampling width: 0.020°; scanning speed: 2°/min; divergence slit: 1°; scatter slit: 1°; receiving slit: 0.50 mm). The particle sizes of particles of the respective catalytically active metals (including Mn, Fe, Co, Ni, Cu, Zn, Ru, Rh, Pd, Ag, Re, Os, Ir, Pt and Au) which were determined using the X-ray diffractometer were the same as the primary particle sizes thereof as measured using the electron microscope.

The cross section of the heterogeneous catalyst structural body was observed by a stereoscopic microscope to qualitatively evaluate denseness of the structural body. The presence of the catalyst layer on which the catalytically active metal was supported was determined by the color difference on the cross section. More specifically, the color of the layer of the catalytically active metal supported on the Mg-Al oxide carrier having a white color was different from the white color of the carrier. The thickness of the catalyst layer was measured at 80 positions thereof, and was expressed by the average value, where measuring time is 80.

The catalytic activity of the heterogeneous catalyst structural body was evaluated from a conversion rate of an influent gas such as hydrocarbons by analyzing a composition of an effluent gas as measured at respective temperatures and times. In addition, the retention rate of the conversion rate of the influent gas such as oxygen-containing hydrocarbons was determined to evaluate oxidation resistance of the heterogeneous catalyst structural body.

Typical examples of the present invention are described below.

Example 1: <Production of Hydrotalcite Compound Particles>

$MgSO_4 \cdot 7H_2O$ and $Al_2(SO_4)_3 \cdot 8H_2O$ were weighed in amounts of 352.0 g and 138.9 g, respectively, and dissolved in pure water to prepare 2000 mL of a mixed solution thereof. Separately, 327.1 mL of a NaOH solution (concentration: 14 mol/L) was mixed with a solution in which 42.4 g of $Na_2CO_3$ was dissolved, to prepare 2500 mL of an alkali mixed solution. Then, the thus prepared alkali mixed solution was mixed with the above mixed solution comprising the magnesium salt and aluminum salt, and the resulting solution was aged at 80°C for 6 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 45.2 m$^2$/g.

<Production of Heterogeneous Catalyst Structural Body>

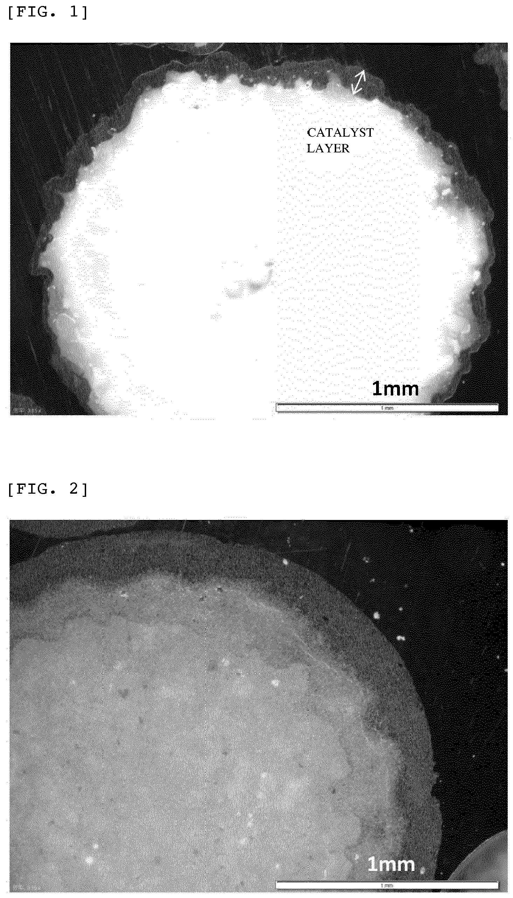

Next, 151.3 g of the thus obtained hydrotalcite compound particles were mixed with 8.32 g of boehmite, 12.1 g of PVA, 27.23 g of water and 90.75 g of ethylene glycol, and the resulting mixture was kneaded using a screw kneader for 2 hr. The thus obtained clayey mass kneaded material was formed into a spherical shape by a compression molding method, and the resulting spherical molded product was dried at 105°C and heat-treated at 120°C for 4 hr. Then, a Ru solution having a free nitric acid concentration of 1.2% by weight was prepared, and sprayed onto the heat-treated molded product such that Ru was supported thereon in an amount of 1.0% by weight in terms of the metal element, and then dried at 60°C, followed by subjecting the resulting dried product to reducing treatment in a gas flow comprising hydrogen and argon at a volume ratio of hydrogen/argon of 50/50 at 400°C for 3 hr, thereby obtaining a heterogeneous catalyst structural body. As a result, it was confirmed that the resulting 2.1 mmφ heterogeneous catalyst structural body had a BET specific surface area of 43.1 m$^2$/g, a ratio Mg/Al of 2.01 and an average crushing strength of 112.2 N. In addition, it was also confirmed that the content of Ru in the heterogeneous catalyst structural body was 1.03% by weight, the particle diameter of the Ru particles supported thereon was 2.2 nm, and Ru was present in the thickness range of 25 $\mu$m as measured below from the surface of the heterogeneous catalyst structural body, and the catalyst layer had a

thickness of 25 $\mu$m. Various properties of the heterogeneous catalyst structural body are listed in Table 1. Also, FIGS. 1 and 2 are microphotographs obtained by a stereoscopic microscope showing cross sections of the heterogeneous catalyst structural bodies on which the catalytically active metals were respectively supported. Meanwhile, in the microphotographs of FIGS. 1 and 2, those structural bodies obtained in Example 1 and Comparative Example 2 are respectively shown as typical ones. The microphotograph of the cross section of Example 1 shows the section of the heterogeneous catalyst structural body having a diameter of about 2.1 mm$\phi$ in which the white central portion had a dense structure. The catalyst layer was observed as a black portion as indicated by the arrow. Although the dark portion also indicates the catalyst layer, the concentration of the catalytically active metal particles in the dark portion was low.

<Reaction Using Heterogeneous Catalyst Structural Body>

The performance of the obtained heterogeneous catalyst structural body was evaluated as follows. That is, 10 to 50 g of the heterogeneous catalyst structural body was filled in a stainless steel reaction tube having a diameter of 20 mm to prepare a catalyst-filled tube. In order to examine oxidation resistance of the heterogeneous catalyst structural body, the steam reforming reaction and methanation reaction in which oxygen was introduced were conducted for 200 hr, and then the acceleration test was conducted at a high space velocity to examine deterioration of the heterogeneous catalyst structural body due to the inclusion of oxygen and thereby evaluate oxidation resistance thereof.

<Steam Reforming Reaction Using Heterogeneous Catalyst Structural Body>

In the steam reforming reaction in which oxygen was introduced, a raw material gas and steam were flowed through the catalyst-filled tube (reactor) prepared above under a reaction pressure of 0.01 MPa at a reaction temperature of 600°C and a space velocity of each of 1000 h$^{-1}$ and 10000 h$^{-1}$ to evaluate a catalyst performance of the heterogeneous catalyst structural body. In this case, the ratio of steam/carbon (S/C) was 3.0, and the steam reforming reaction was conducted for 200 hr by using a city gas (13A) comprising 6% of oxygen as the raw material gas.

Since $C_n$ (n≥2) hydrocarbons were decomposed into methane, CO, $CO_2$ and $H_2$, the heterogeneous catalyst structural body was evaluated using a $C_n$ conversion rate (conversion rate of whole hydrocarbons). Also, when using a city gas (13A) as the raw material gas, the conversion rate of the $C_n$ (n≥2) hydrocarbons (including ethane, propane, butane and pentane, etc.) in the raw material gas was calculated in terms of the number of moles thereof as a conversion rate of the city gas (13A).

$$\text{13A Conversion Rate (Conversion Rate of Whole}$$

$$\text{Hydrocarbons)} = (CO + CO_2)/(CO + CO_2 + CH_4 + C_2H_6 + C_3H_8)$$

The results of the 13A conversion rate in the steam reforming reaction in which oxygen was introduced are shown in Table 2. The 13A conversion rate was not less than 65% even at a space velocity of 10000 h$^{-1}$.

<Methanation Reaction Using Heterogeneous Catalyst Structural Body>

In the methanation reaction in which oxygen was introduced, a raw material gas and hydrogen were flowed through the catalyst-filled tube (reactor) prepared above under a reaction pressure of 0.01 MPa at a reaction temperature of 600°C and a space velocity of 5000 h$^{-1}$ to evaluate a catalyst performance of the heterogeneous catalyst structural body. In this case, the ratio of hydrogen/carbon monoxide ($H_2$/CO) was 3.0, and the methanation reaction was conducted for 300 hr by using CO comprising 6% of oxygen as the raw material gas.

Meanwhile, the CO conversion rate shown in Table 3 is the value calculated in terms of the number of moles thereof according to the following formula.

$$\text{CO Conversion Rate (\%)} = (1 - \text{CO Concentration at}$$

$$\text{Outlet/CO Concentration at Inlet)} \times 100$$

In Table 3, there are shown the CO conversion rates in the methanation reaction in which oxygen was introduced. Meanwhile, the methanation reaction was conducted using the respective heterogeneous catalyst structural bodies obtained in Examples 1, 2, 5 and 6 and the respective catalyst structural bodies obtained in Comparative Examples 1, 2 and 3. In all of the respective Examples, the CO conversion rate was not less than 85% under any conditions, regarded as high rates.

Example 2: <Production of Hydrotalcite Compound Particles>

$Mg(NO_3)_2 \cdot 6H_2O$ and $Al(NO_3)_3 \cdot 9H_2O$ were weighed in amounts of 923.1 g and 450.2 g, respectively, and dissolved in pure water to prepare 5000 mL of a mixed solution thereof. Separately, 1029 mL of a NaOH solution (concentration: 14 mol/L) was mixed with a solution in which 178.1 g of $Na_2CO_3$ was dissolved, to prepare 10000 mL of an alkali mixed solution. Then, the thus prepared alkali mixed solution was mixed with the above mixed solution comprising the magnesium salt and aluminum salt, and the resulting solution was aged at 60°C for 4 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 98.2 $m^2/g$.

<Production of Heterogeneous Catalyst Structural Body>

Next, 453.8 g of the thus obtained hydrotalcite compound particles were mixed with 49.91 g of boehmite, 68.06 g of ethyl cellulose, 95.29 g of water and 326.7 g of propylene glycol, and the resulting mixture was kneaded using a kneader for 1 hr. The thus obtained clayey mass kneaded material was formed into a spherical shape by a press molding method, and the resulting spherical molded product was dried at 95°C and heat-treated at 950°C for 12 hr. Then, a mixed solution of Rh and Pt having a free nitric acid concentration of 6.0% by weight was prepared, and sprayed onto the heat-treated molded product such that Rh and Pt were supported thereon in amounts of 0.3% by weight and 0.2% by weight, respectively, in terms of the respective metal elements, and then dried at 80°C, followed by subjecting the resulting dried product to reducing treatment in a 100% hydrogen gas flow at 300°C for 1 hr, thereby obtaining a heterogeneous catalyst structural body. As a result, it was confirmed that the resulting 3.2 mm$\phi$ heterogeneous catalyst structural body had a BET specific surface area of 92.3 $m^2/g$, a ratio Mg/Al of 0.85 and an average crushing strength of 57.3 N. In addition, it was also confirmed that the content of Rh in the heterogeneous catalyst structural body was 0.31% by weight, the particle diameter of the Rh particles supported thereon was 1.2 nm, the content of Pt therein was 0.22% by weight, the particle diameter of the Pt particles supported thereon was 0.8 nm, the structural body had a dense inside structure, and the catalyst layer formed from the surface of the structural body had a thickness of 12 $\mu$m.

Example 3: <Production of Hydrotalcite Compound Particles>

$MgCl_2 \cdot 6H_2O$ and $AlCl_3 \cdot 9H_2O$ were weighed in amounts of 1207.1 g and 188.6 g, respectively, and dissolved in pure water to prepare 10000 mL of a mixed solution thereof. Separately, 1183 mL of a NaOH solution (concentration: 14 mol/L) was mixed with a solution in which 115.9 g of $Na_2CO_3$ was dissolved, to prepare 15000 mL of an alkali mixed solution. Then, the thus prepared alkali mixed solution was mixed with the above mixed solution comprising the magnesium salt and aluminum salt, and the resulting solution was aged at 90°C for 4 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 66.2 $m^2/g$.

<Production of Heterogeneous Catalyst Structural Body>

Next, 567.2 g of the thus obtained hydrotalcite compound particles were mixed with 5.672 g of gibbsite, 113.4 g of methyl cellulose, 130.5 g of water and 397.0 g of glycerin, and the resulting mixture was kneaded using a double arm kneader for 4 hr. The thus obtained clayey mass kneaded material was formed into a spherical shape by a compression molding method, and the resulting spherical molded product was dried at 110°C and heat-treated at 1180°C for 6 hr. Then, a mixed solution of Pd and Ir having a free nitric acid concentration of 12.0% by weight was prepared, and sprayed onto the heat-treated molded product such that Pd and Ir were supported thereon in amounts of 4.4% by weight and 3.8% by weight, respectively, in terms of the respective metal elements, and then dried at 55°C, followed by subjecting the resulting dried product to reducing treatment in a gas flow comprising hydrogen and nitrogen at a volume ratio of hydrogen/nitrogen of 80/20 at 550°C for 1 hr, thereby obtaining a heterogeneous catalyst structural body. As a result, it was confirmed that the resulting 2.9 mm$\phi$ heterogeneous catalyst structural body had a BET specific surface area of 54.2 $m^2/g$, a ratio Mg/Al of 3.58 and an average crushing strength of 157.6 N. In addition, it was also confirmed that the content of Pd in the heterogeneous catalyst structural body was 4.24% by weight, the particle diameter of the Pd particles supported thereon was 13.5 nm, the content of Ir therein was 3.64% by weight, the particle diameter of the Ir particles supported thereon was 10.2 nm, the structural body had a dense inside structure, and the catalyst layer formed from the surface of the structural body had a thickness of 102 $\mu$m.

Example 4: <Production of Hydrotalcite Compound Particles>

$MgSO_4 \cdot 7H_2O$ and $Al_2(SO_4)_3 \cdot 8H_2O$ were weighed in amounts of 704.0 g and 277.8 g, respectively, and dissolved in pure water to prepare 2000 mL of a mixed solution thereof. Separately, 563.1 mL of a NaOH solution (concentration: 14 mol/L) was mixed with a solution in which 181.7 g of $Na_2CO_3$ was dissolved, to prepare 3000 mL of an alkali mixed solution. Then, the thus prepared alkali mixed solution was mixed with the above mixed solution comprising the magnesium salt and aluminum salt, and the resulting solution was aged at 160°C for 8 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 17.2 m$^2$/g.

<Production of Heterogeneous Catalyst Structural Body>

Next, 302.5 g of the thus obtained hydrotalcite compound particles were mixed with 22.69 g of α-alumina, 19.66 g of methyl cellulose, 96.81 g of water and 166.4 g of ethylene glycol, and the resulting mixture was kneaded using a screw kneader for 0.5 hr. The thus obtained clayey mass kneaded material was formed into a spherical shape by a compression molding method, and the resulting spherical molded product was dried at 100°C and heat-treated at 1220°C for 3 hr. Then, a mixed solution of Ru and Pt having a free nitric acid concentration of 25.4% by weight was prepared, and sprayed onto the heat-treated molded product such that Ru and Pt were supported thereon in amounts of 2.5% by weight and 1.1% by weight, respectively, in terms of the respective metal elements, and then dried at 45°C, followed by subjecting the resulting dried product to reducing treatment in a gas flow comprising hydrogen and nitrogen at a volume ratio of hydrogen/nitrogen of 90/10 at 520°C for 2 hr, thereby obtaining a heterogeneous catalyst structural body. As a result, it was confirmed that the resulting 3.3 mmφ heterogeneous catalyst structural body had a BET specific surface area of 21.1 m$^2$/g, a ratio Mg/Al of 1.80 and an average crushing strength of 125.3 N. In addition, it was also confirmed that the content of Ru in the heterogeneous catalyst structural body was 2.47% by weight, the particle diameter of the Ru particles supported thereon was 9.2 nm, the content of Pt therein was 1.07% by weight, the particle diameter of the Pt particles supported thereon was 5.6 nm, the structural body had a dense inside structure, and the catalyst layer formed from the surface of the structural body had a thickness of 72 μm.

Example 5: <Production of Hydrotalcite Compound Particles>

$MgSO_4 \cdot 7H_2O$ and $Al_2(SO_4)_3 \cdot 8H_2O$ were weighed in amounts of 150.2 g and 46.31 g, respectively, and dissolved in pure water to prepare 1500 mL of a mixed solution thereof. Separately, 128.0 mL of a NaOH solution (concentration: 14 mol/L) was mixed with a solution in which 24.23 g of $Na_2CO_3$ was dissolved, to prepare 2500 mL of an alkali mixed solution. Then, the thus prepared alkali mixed solution was mixed with the above mixed solution comprising the magnesium salt and aluminum salt, and the resulting solution was aged at 95°C for 6 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 28.8 m$^2$/g.

<Production of Heterogeneous Catalyst Structural Body>

Next, 60.5 g of the thus obtained hydrotalcite compound particles were mixed with 39.33 g of magnesia, 9.983 g of PVA, 13.31 g of water and 48.41 g of propylene glycol, and the resulting mixture was kneaded using a double arm kneader for 6 hr. The thus obtained clayey mass kneaded material was formed into a spherical shape by a compression molding method, and the resulting spherical molded product was dried at 120°C and heat-treated at 1050°C for 12 hr. Then, a mixed solution of Ni and Co having a free nitric acid concentration of 16.2% by weight was prepared, and the heat-treated molded product was impregnated in the thus prepared mixed solution such that Ni and Co were supported thereon in amounts of 8.2% by weight and 5.6% by weight, respectively, in terms of the respective metal elements. The thus impregnated molded product was then dried at 120°C, followed by subjecting the resulting dried product to reducing treatment in a gas flow comprising hydrogen and nitrogen at a volume ratio of hydrogen/nitrogen of 90/10 at 780°C for 6 hr, thereby obtaining a heterogeneous catalyst structural body. As a result, it was confirmed that the resulting 2.2 mmφ heterogeneous catalyst structural body had a BET specific surface area of 26.2 m$^2$/g, a ratio Mg/Al of 8.32 and an average crushing strength of 88.5 N. In addition, it was also confirmed that the content of Ni in the heterogeneous catalyst structural body was 7.78% by weight, the particle diameter of the Ni particles supported thereon was 15.2 nm, the content of Co therein was 5.16% by weight, the particle diameter of the Co particles supported thereon was 13.2 nm, the structural body had a dense inside structure, and the catalyst layer formed from the surface of the structural body had a thickness of 146 μm.

Example 6: <Production of Hydrotalcite Compound Particles>

$MgCl_2 \cdot 6H_2O$ and $AlCl_3 \cdot 9H_2O$ were weighed in amounts of 164.8 g and 48.21 g, respectively, and dissolved in pure water to prepare 1000 mL of a mixed solution thereof. Separately, 147.0 mL of a NaOH solution (concentration: 14 mol/L) was mixed with a solution in which 19.08 g of $Na_2CO_3$ was dissolved, to prepare 2000 mL of an alkali mixed solution. Then, the thus prepared alkali mixed solution was mixed with the above mixed solution comprising the magnesium salt and aluminum salt, and the resulting solution was aged at 80°C for 4 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 38.2 $m^2$/g.

<Production of Heterogeneous Catalyst Structural Body>

Next, 68.06 g of the thus obtained hydrotalcite compound particles were mixed with 3.743 g of boehmite, 10.21 g of ethyl cellulose, 12.93 g of water and 51.04 g of ethylene glycol, and the resulting mixture was kneaded using a double arm kneader for 3 hr. The thus obtained clayey mass kneaded material was formed into a spherical shape by a compression molding method, and the resulting spherical molded product was dried at 120°C and heat-treated at 1120°C for 6 hr. Then, a mixed solution of Ru and Ni having a free nitric acid concentration of 22.5% by weight was prepared, and sprayed onto the heat-treated molded product such that Ru and Ni were supported thereon in amounts of 0.5% by weight and 3.0% by weight, respectively, in terms of the respective metal elements, and then dried at 60°C, followed by subjecting the resulting dried product to reducing treatment in a gas flow comprising hydrogen and argon at a volume ratio of hydrogen/argon of 50/50 at 820°C for 3 hr, thereby obtaining a heterogeneous catalyst structural body. As a result, it was confirmed that the resulting 3.1 mm$\phi$ heterogeneous catalyst structural body had a BET specific surface area of 35.5 $m^2$/g, a ratio Mg/Al of 2.01 and an average crushing strength of 102.3 N. In addition, it was also confirmed that the content of Ru in the heterogeneous catalyst structural body was 0.49% by weight, the particle diameter of the Ru particles supported thereon was 2.1 nm, the content of Ni therein was 2.99% by weight, the particle diameter of the Ni particles supported thereon was 5.5 nm, the structural body had a dense inside structure, and the catalyst layer formed from the surface of the structural body had a thickness of 38 $\mu$m.

Example 7: <Production of Hydrotalcite Compound Particles>

$MgSO_4 \cdot 7H_2O$ and $Al_2(SO_4)_3 \cdot 8H_2O$ were weighed in amounts of 340.4 g and 101.8 g, respectively, and dissolved in pure water to prepare 1000 mL of a mixed solution thereof. Separately, 287.0 mL of a NaOH solution (concentration: 14 mol/L) was mixed with a solution in which 66.56 g of $Na_2CO_3$ was dissolved, to prepare 2000 mL of an alkali mixed solution. Then, the thus prepared alkali mixed solution was mixed with the above mixed solution comprising the magnesium salt and aluminum salt, and the resulting solution was aged at 75°C for 4 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 33.5 $m^2$/g.

<Production of Heterogeneous Catalyst Structural Body>

Next, 136.1 g of the thus obtained hydrotalcite compound particles were mixed with 7.487 g of bayerite, 12.25 g of PVA, 38.12 g of water and 98.01 g of ethylene glycol, and the resulting mixture was kneaded using a screw kneader for 2 hr. The thus obtained clayey mass kneaded material was formed into a spherical shape by a compression molding method, and the resulting spherical molded product was dried at 80°C and heat-treated at 1320°C for 3 hr. Then, a mixed solution of Ru and Ag having a free nitric acid concentration of 15.2% by weight was prepared, and sprayed onto the heat-treated molded product such that Ru and Ag were supported thereon in amounts of 1.5% by weight and 0.1% by weight, respectively, in terms of the respective metal elements, and then dried at 60°C, followed by subjecting the resulting dried product to reducing treatment in a gas flow comprising hydrogen and nitrogen at a volume ratio of hydrogen/nitrogen of 60/40 at 480°C for 3 hr, thereby obtaining a heterogeneous catalyst structural body. As a result, it was confirmed that the resulting 2.8 mm$\phi$ heterogeneous catalyst structural body had a BET specific surface area of 16.4 $m^2$/g, a ratio Mg/Al of 2.54 and an average crushing strength of 202.9 N. In addition, it was also confirmed that the content of Ru in the heterogeneous catalyst structural body was 1.51% by weight, the particle diameter of the Ru particles supported thereon was 5.4 nm, the content of Ag therein was 0.1% by weight, the particle diameter of the Ag particles supported thereon was 6.2 nm, the structural body had a dense inside structure, and the catalyst layer formed from the surface of the structural body had a thickness of 23 $\mu$m.

Example 8: <Production of Hydrotalcite Compound Particles>

$Mg(NO_3)_2 \cdot 6H_2O$ and $Al(NO_3)_3 \cdot 9H_2O$ were weighed in amounts of 512.8 g and 187.6 g, respectively, and dissolved in pure water to prepare 2000 mL of a mixed solution thereof. Separately, 500.1 mL of a NaOH solution (concentration: 14 mol/L) was mixed with a solution in which 95.4 g of $Na_2CO_3$ was dissolved, to prepare 3000 mL of an alkali mixed solution. Then, the thus prepared alkali mixed solution was mixed with the above mixed solution comprising the magnesium salt and aluminum salt, and the resulting solution was aged at 80°C for 6 hr to obtain a hydrotalcite compound. The resulting hydrotalcite compound was separated by filtration, dried, and then pulverized to obtain hydrotalcite compound particles. As a result, it was confirmed that the thus obtained hydrotalcite compound particles had a BET specific surface area of 42.1 m²/g.

<Production of Heterogeneous Catalyst Structural Body>

Next, 226.9 g of the thus obtained hydrotalcite compound particles were mixed with 17.02 g of $\alpha$-alumina, 37.43 g of carboxymethyl cellulose, 34.03 g of water and 170.2 g of ethylene glycol, and the resulting mixture was kneaded using a screw kneader for 4 hr. The thus obtained clayey mass kneaded material was formed into a spherical shape by a compression molding method, and the resulting spherical molded product was dried at 100°C and heat-treated at 1100°C for 6 hr. Then, a mixed solution of Ru and Ag having a free nitric acid concentration of 8.2% by weight was prepared, and sprayed onto the heat-treated molded product such that Rh and Cu were supported thereon in amounts of 0.5% by weight and 3.1% by weight, respectively, in terms of the respective metal elements, and then dried at 80°C, followed by subjecting the resulting dried product to reducing treatment in a gas flow comprising hydrogen and nitrogen at a volume ratio of hydrogen/nitrogen of 50/50 at 550°C for 3 hr, thereby obtaining a heterogeneous catalyst structural body. As a result, it was confirmed that the resulting 2.8 mmφ heterogeneous catalyst structural body had a BET specific surface area of 37.5 m²/g, a ratio Mg/Al of 1.51 and an average crushing strength of 94.2 N. In addition, it was also confirmed that the content of Rh in the heterogeneous catalyst structural body was 0.48% by weight, the particle diameter of the Rh particles supported thereon was 2.1 nm, the content of Cu therein was 3.08% by weight, the particle diameter of the Cu particles supported thereon was 16.2 nm, the structural body had a dense inside structure, and the catalyst layer formed from the surface of the structural body had a thickness of 58 $\mu$m.

Comparative Example 1:

A mixture comprising 746.3 g of $\gamma$-alumina and 87.2 g of PVA was granulated using a roller granulator while spraying pure water thereto, thereby obtaining a spherical $\gamma$-alumina molded product. The resulting molded product was dried at 150°C and heat-treated at 1130°C for 8 hr. Next, the heat-treated molded product was impregnated in a solution comprising Pt and Rh such that Pt and Rh were supported on the molded product in amounts of 4.2% by weight and 3.1% by weight, respectively, in terms of the respective metal element, and then dried at 70°C, followed by subjecting the resulting dried product to reducing treatment in a 100% hydrogen gas flow at 350°C for 2 hr, thereby obtaining a catalyst structural body. As a result, it was confirmed that the resulting catalyst structural body had a size of 2.2 mmφ, a BET specific surface area of 45.2 m²/g and an average crushing strength of 15.2 N. In addition, it was also confirmed that the content of Pt in the catalyst structural body was 4.11% by weight, the particle diameter of the Pt particles supported thereon was 25.5 nm, the content of Rh therein was 2.92% by weight, the particle diameter of the Rh particles supported thereon was 28.2 nm, and the catalyst layer formed from the surface of the structural body had a thickness of 322 $\mu$m.

Comparative Example 2:

Magnesia in an amount of 256.2 g was mixed with 198.1 g of $\gamma$-alumina, 45.61 g of PVA and 322.1 g of water, and the resulting mixture was kneaded using a screw kneader for 3 hr. The thus obtained clayey mass kneaded material was formed into a spherical shape by a compression molding method, and the resulting spherical molded product was dried at 120°C and heat-treated at 1230°C for 4 hr. Then, Ru was sprayed and supported onto the heat-treated molded product in an amount of 2.2% by weight in terms of the metal element, and the resulting molded product was then dried at 60°C, followed by subjecting the obtained dried product to reducing treatment in a gas flow comprising hydrogen and argon at a volume ratio of hydrogen/argon of 80/20 at 650°C for 2 hr, thereby obtaining a catalyst structural body. As a result, it was confirmed that the resulting catalyst structural body had a size of 2.1 mmφ, a BET specific surface area of 5.4 m²/g, a ratio Mg/Al of 1.93 and an average crushing strength of 23.3 N. In addition, it was also confirmed that the content of Ru in the catalyst structural body was 2.32% by weight, the particle diameter of the Ru particles supported thereon was 23.1 nm, and the catalyst layer formed from the surface of the structural body had a thickness of 431 $\mu$m. As recognized from the stereoscopic microphotograph shown in FIG. 2, it was confirmed that in the sample of Comparative Example 2, Ru was intruded into an inside of the structural body such that no white portion corresponding to a dense portion of the structural body was observed. It is estimated that the intrusion of Ru was caused by excessively large pores in the structural body as a whole.

Comparative Example 3:

<Production of Heterogeneous Catalyst Structural Body>

The hydrotalcite compound particles obtained in Example 1 in an amount of 181.1 g were mixed with 41.59 g of boehmite, 15.13 g of PVA, 34.03 g of water and 113.4 g, and the resulting mixture was kneaded using a screw kneader for 3 hr. The thus obtained clayey mass kneaded material was formed into a spherical shape by a compression molding method, and the resulting spherical molded product was dried at 120°C and calcined at 830°C for 2 hr. Then, Ru was sprayed and supported onto the calcined molded product in an amount of 1.0% by weight in terms of the metal element, and the resulting molded product was then dried at 80°C, followed by subjecting the resulting dried product to reducing treatment in a 100% hydrogen gas flow at 700°C for 1 hr, thereby obtaining a catalyst structural body. As a result, it was confirmed that the resulting 3.1 mm$\phi$ catalyst structural body had a BET specific surface area of 103.5 m$^2$/g, a ratio Mg/Al of 1.25 and an average crushing strength of 11.4 N. In addition, it was also confirmed that the content of Ru in the catalyst structural body was 1.05% by weight, the particle diameter of the Ru particles supported thereon was 22.4 nm, and the catalyst layer formed from the surface of the structural body had a thickness of 258 $\mu$m.

## Table 1

| Examples and Comparative Examples | Production process | Properties of structure of heterogeneous catalyst structural body | | |
|---|---|---|---|---|
| | Free nitric acid concentration | Active metal species | | |
| | | Kind | Amount | Particle diameter |
| | [wt%] | [-] | [wt%] | [nm] |
| Example 1 | 1.2 | Ru | 1.03 | 2.2 |
| Example 2 | 6.0 | Rh | 0.31 | 1.2 |
| | | Pt | 0.32 | 0.8 |
| Example 3 | 12.0 | Pd | 4.24 | 13.5 |
| | | Ir | 3.64 | 10.2 |
| Example 4 | 25.4 | Ru | 2.47 | 9.2 |
| | | Pt | 1.07 | 5.6 |
| Example 5 | 16.2 | Ni | 7.78 | 15.2 |
| | | Co | 5.16 | 13.2 |
| Example 6 | 22.5 | Ru | 0.49 | 5.5 |
| | | Ni | 2.99 | 2.1 |
| Example 7 | 15.2 | Ru | 1.51 | 5.4 |
| | | Ag | 0.1 | 6.2 |
| Example 8 | 8.2 | Rh | 0.48 | 2.1 |
| | | Cu | 3.08 | 16.2 |
| Comparative Example 1 | 0.0 | Pt | 4.11 | 25.5 |
| | | Rh | 2.92 | 29.2 |
| Comparative Example 2 | 0.0 | Ru | 2.32 | 23.2 |
| Comparative Example 3 | 0.0 | Ru | 1.05 | 22.4 |

Table 1 (continued)

| Examples and Comparative Examples | Properties concerning the structure of heterogeneous catalyst structural body | | | | |
|---|---|---|---|---|---|
| | Atomic ratio of Mg/Al | Thickness of catalyst layer | Volume ratio of catalyst layer | Crushing strength | BET specific surface area |
| | [-] | [μm] | [%] | [N] | [m²/g] |
| Example 1 | 2.01 | 25 | 7.0 | 112.2 | 43.1 |
| Example 2 | 0.85 | 12 | 2.2 | 57.3 | 92.3 |
| Example 3 | 3.58 | 102 | 20 | 157.6 | 54.2 |
| Example 4 | 1.80 | 72 | 13 | 125.3 | 21.2 |
| Example 5 | 8.32 | 146 | 35 | 88.5 | 26.2 |
| Example 6 | 2.01 | 38 | 7.0 | 102.3 | 35.5 |
| Example 7 | 2.54 | 23 | 4.4 | 202.9 | 16.4 |
| Example 8 | 1.51 | 58 | 12 | 94.2 | 37.5 |
| Comparative Example 1 | No Mg | 322 | 65 | 15.2 | 45.2 |
| Comparative Example 2 | 1.93 | 431 | 100 | 23.3 | 5.4 |
| Comparative Example 3 | 1.25 | 258 | 42 | 11.4 | 103.5 |

Table 2

| Examples and Comparative Examples | Steam reforming reaction using a city gas 13A comprising 6% of oxygen | | | |
|---|---|---|---|---|
| | Active metal species | Reaction time | 13A conversion rate (1000h⁻¹) | 13A conversion rate (10000h⁻¹) |
| | | (h) | (%) | (%) |
| Example 1 | Ru:1.03wt% | 0.1 | 78.25 | 72.11 |
| | | 200 | 78.25 | 70.9 |
| Example 2 | Rh:0.31wt% | 0.1 | 78.24 | 71.88 |
| | Pt:0.32wt% | 200 | 78.24 | 71.78 |
| Example 3 | Pd:4.24wt% | 0.1 | 78.25 | 72.15 |
| | Ir:3.64wt% | 200 | 78.26 | 72.16 |
| Example 4 | Ru:2.47wt% | 0.1 | 78.26 | 72.11 |
| | Pt:1.07wt% | 200 | 78.24 | 71.98 |
| Example 5 | Ni:7.78wt% | 0.1 | 78.24 | 71.02 |
| | Co:5.16wt% | 200 | 78.25 | 70.92 |

(continued)

| Examples and Comparative Examples | Steam reforming reaction using a city gas 13A comprising 6% of oxygen | | | |
|---|---|---|---|---|
| | Active metal species | Reaction time | 13A conversion rate (1000h$^{-1}$) | 13A conversion rate (10000h$^{-1}$) |
| | | (h) | (%) | (%) |
| Example 6 | Ru:0.49wt% | 0.1 | 78.27 | 70.98 |
| | Ni:2.99wt% | 200 | 78.25 | 70.91 |
| Example 7 | Ru:1.51wt% | 0.1 | 78.24 | 71.17 |
| | Ag:0.10wt% | 200 | 78.26 | 71.05 |
| Example 8 | Rh:0.48wt% | 0.1 | 78.27 | 71.03 |
| | Cu:3.08wt% | 200 | 78.25 | 69.98 |
| Comparative Example 1 | Pt:4.11wt% | 0.1 | 78.23 | 65.42 |
| | Rh:2.92wt% | 200 | 51.13 | 31.22 |
| Comparative Example 2 | Ru:2.32wt% | 0.1 | 78.22 | 51.12 |
| | | 200 | 41.35 | 27.12 |
| Comparative Example 3 | Ru:1.05wt% | 0.1 | 78.24 | 46.32 |
| | | 200 | 31.22 | 16.43 |

Table 3

| Examples and Comparative Examples | Methanation reaction using CO comprising 6% of oxygen | | | |
|---|---|---|---|---|
| | Active metal species | Reaction time | Reaction temperature | CO conversion rate (5000h$^{-1}$) |
| | | (h) | (°C) | (%) |
| Example 1 | Ru:1.03wt% | 0.1 | 150 | 90.2 |
| | | | 200 | 100 |
| | | 300 | 150 | 89.5 |
| | | | 200 | 100 |
| Example 2 | Rh:0.31wt% Pt:0.32wt% | 0.1 | 150 | 91.5 |
| | | | 200 | 100 |
| | | 300 | 150 | 87.4 |
| | | | 200 | 100 |
| Example 5 | Ni:7.78wt% Co:5.16wt% | 0.1 | 150 | 86.3 |
| | | | 200 | 100 |
| | | 300 | 150 | 87.5 |
| | | | 200 | 99.8 |
| Example 6 | Ru:0.49wt% Ni:2.99wt% | 0.1 | 150 | 89.5 |
| | | | 200 | 99.6 |
| | | 300 | 150 | 87.2 |
| | | | 200 | 99.3 |

(continued)

| Examples and Comparative Examples | Methanation reaction using CO comprising 6% of oxygen | | | |
| --- | --- | --- | --- | --- |
| | Active metal species | Reaction time | Reaction temperature | CO conversion rate (5000h$^{-1}$) |
| | | (h) | (°C) | (%) |
| Comparative Example 1 | Pt:4.11wt% Rh:2.92wt% | 0.1 | 150 | 63.2 |
| | | | 200 | 91.4 |
| | | 300 | 150 | 54.2 |
| | | | 200 | 83.4 |
| Comparative Example 2 | Ru:2.32wt% | 0.1 | 150 | 67.3 |
| | | | 200 | 81.1 |
| | | 300 | 150 | 47.1 |
| | | | 200 | 62.8 |
| Comparative Example 3 | Ru:1.05wt% | 0.1 | 150 | 28.1 |
| | | | 200 | 56.2 |
| | | 300 | 150 | 11.2 |
| | | | 250 | 32.9 |

INDUSTRIAL APPLICABILITY

The heterogeneous catalyst structural body with a size of 1 to 30 mm according to the present invention comprises a catalyst carrier having a dense inside structure and active metal particles that are fixed in the form of very fine particles in the vicinity of the surface of the catalyst carrier, and therefore has high mechanical strength and a large contact area with a raw material gas as well as exhibits excellent catalytic activity and oxidation resistance when used in various heterogeneous reactions such as steam reforming reaction, partial oxidation reaction, autothermal reaction, CO modification reaction, CO selective oxidation reaction and methanation reaction as well as desulfurization, dehydrogenation, decomposition reaction, etc.

In addition, the heterogeneous catalyst structural body according to the present invention comprises at least magnesium and aluminum, exhibits a large BET specific surface area and high mechanical strength, and further has a large magnesium content. Therefore, the heterogeneous catalyst structural body can also be suitably used as a catalyst for reforming hydrocarbons comprising a large amount of a sulfur component, such as a city gas, LPG, a biomass, etc.

**Claims**

1.    A heterogeneous catalyst structural body with a size of 1 to 30 mm, comprising:

an oxide carrier having a dense inside structure comprising magnesium and aluminum, and
catalytically active metal particles having a primary particle diameter of 0.5 to 20 nm;
said structural body having an atomic ratio of Mg/Al of 0.7 to 10, a BET specific surface area of 10 to 100 m$^2$/g and an average crushing strength of not less than 30 N, in which the catalytically active metal particles are present in the range of 5 to 200 $\mu$m below from a surface of the oxide carrier.

2.    The heterogeneous catalyst structural body according to claim 1, wherein the catalytically active metal particles comprise at least one element selected from the group consisting of Mn, Fe, Co, Ni, Cu, Zn, Ru, Rh, Pd, Ag, Re, Os, Ir, Pt and Au, and are supported in an amount of 0.05 to 10% by weight on the oxide carrier.

3.    A process for producing the heterogeneous catalyst structural body according to claim 1 or 2, comprising a step of supporting a raw material capable of forming the catalytically active metal particles on the oxide carrier, in which the raw material is used in the form of a raw material solution comprising free nitric acid of 1 to 30% by weight.

[FIG. 1]

CATALYST
LAYER

1mm

[FIG. 2]

1mm

## INTERNATIONAL SEARCH REPORT

| International application No. |
| --- |
| PCT/JP2017/002267 |

A. CLASSIFICATION OF SUBJECT MATTER
*B01J37/02*(2006.01)i, *B01J23/46*(2006.01)i, *B01J23/755*(2006.01)i, *B01J23/89*(2006.01)i, *B01J32/00*(2006.01)i, *B01J35/02*(2006.01)i, *B01J35/10*(2006.01)i

According to International Patent Classification (IPC) or to both national classification and IPC

B. FIELDS SEARCHED

Minimum documentation searched (classification system followed by classification symbols)
B01J37/02, B01J23/46, B01J23/755, B01J23/89, B01J32/00, B01J35/02, B01J35/10

Documentation searched other than minimum documentation to the extent that such documents are included in the fields searched
Jitsuyo Shinan Koho     1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)
JSTPlus(JDreamIII), JST7580(JDreamIII), JSTChina(JDreamIII)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2009-233662 A  (Toda Kogyo Corp.),<br>15 October 2009 (15.10.2009),<br>claims; paragraphs [0054] to [0058]; examples 1, 6<br>& US 2011/0038775 A1<br>paragraphs [0063] to [0068]; examples 1, 6; claims<br>& US 2013/0045159 A1     & US 2013/0287679 A1<br>& WO 2009/110241 A1      & EP 2251080 A1<br>& KR 10-2010-0125262 A | 1,2<br>3 |
| A | JP 2003-225566 A  (Hiroshima Industrial Promotion Organization),<br>12 August 2003 (12.08.2003),<br>claims; examples<br>(Family: none) | 1-3 |

|☒| Further documents are listed in the continuation of Box C. | |☐| See patent family annex. |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>07 March 2017 (07.03.17) | Date of mailing of the international search report<br>21 March 2017 (21.03.17) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2017/002267 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2011-056391 A  (Toda Kogyo Corp.),<br>24 March 2011 (24.03.2011),<br>claims; paragraph [0047]; examples<br>& US 2012/0201733 A1    & WO 2011/030800 A1<br>& EP 2476484 A1          & CA 2773469 A<br>& CN 102574103 A | 1-3 |
| A | JP 2009-173535 A  (Toda Kogyo Corp.),<br>06 August 2009 (06.08.2009),<br>claims; examples<br>& US 2010/0298133 A1    & WO 2009/084208 A1<br>& EP 2226308 A1          & KR 10-2010-0108349 A | 1-3 |
| A | JP 2007-203159 A  (Toyota Central Research and<br>Development Laboratories, Inc.),<br>16 August 2007 (16.08.2007),<br>paragraph [0021]; examples<br>(Family: none) | 1-3 |

Form PCT/ISA/210 (continuation of second sheet) (January 2015)

**EP 3 409 361 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001146406 A
- JP 2001276623 A
- JP 2003284949 A
- JP 2012187485 A